# EUROPÄISCHE PATENTSCHRIFT

(11) **EP 2 591 662 B1**
(45) Veröffentlichungstag und Bekanntmachung des Hinweises auf die Patenterteilung: **07.01.2015**
(21) Anmeldenummer: 12007572.6
(22) Anmeldetag: 07.11.2012
(51) Int. Cl.: A01D 78/10

(54) **Heuwerbungsmaschine**
Tedder
Faneuse

(30) Priorität: 09.11.2011 DE 202011107681 U
(43) Veröffentlichungstag der Anmeldung: 15.05.2013
(73) Patentinhaber: Alois Pöttinger Maschinenfabrik Ges.m.b.H., 4710 Grieskirchen (AT)
(72) Erfinder: Baumschlager, Heinrich, 4732 ST. Thomas (AT); Kleesadl, Gerhard, 4181 Oberneukirchen (AT); Detzlhofer, Christoph, 4720 Kallham (AT)
(74) Vertreter: Thoma, Michael

(56) Entgegenhaltungen:
- DE-C1- 19 716 379
- DE-U1- 9 014 438

## Beschreibung

Die vorliegende Erfindung betrifft eine Heuwerbungsmaschine, vorzugsweise in Form eines Kreiselschwaders, mit einem sich im Wesentlichen in Fahrtrichtung erstreckenden Maschinenrahmen, der an einem vorderen Ende eine Ankupplungsvorrichtung zur Ankupplung an einen Schlepper aufweist und mit einem Fahrwerk am Boden abgestützt ist, sowie mit zumindest zwei Rechkreiseln, die auf gegenüberliegenden Seiten des Maschinenrahmens vorgesehen sind und jeweils mittels eines quer vom Maschinenrahmen auskragenden Tragarms am Maschinenrahmen angelenkt sind, wobei die Tragarme jeweils um eine im Wesentlichen liegende, in Fahrtrichtung weisende Tragarmschwenkachse am Maschinenrahmen schwenkbar angelenkt und die Rechkreisel jeweils um eine im Wesentlichen ebenfalls liegende, in Fahrtrichtung weisende Kreiselkippachse am Tragarm angelenkt sind, wobei jeweils der Abstand der Kreiselkippachse von der Tragarmschwenkachse des jeweiligen Tragarms durch eine Verstellvorrichtung beim Verschwenken des Tragarms aus einer abgesenkten Arbeitsstellung nach oben in eine Transportstellung verkürzbar ist.

Kreiselschwader besitzen regelmäßig recht große Rechkreisel, die in der Arbeitsstellung um aufrechte Kreiselachsen umlaufende Zinkenträger besitzen, an deren Enden Rechzinken befestigt sind, die auf ihrer Umlaufbahn zyklisch verschwenkt werden, um auf dem Boden liegendes Erntegut wie beispielsweise Gras und Heu zu einem Schwad zusammenzurechen. Insbesondere bei Mehrkreiselschwadern müssen die Rechkreisel zum Zwecke des Transports nach oben geschwenkt werden, um die maximal zulässige Spurbreite für den Straßenverkehr einhalten zu können. In ähnlicher Weise müssen auch Heuwerbungsmaschinen in Form von Zettern zum Straßentransport in ihrer Spurbreite verringert werden, indem die Rechkreisel, die typischerweise in einer quer zur Fahrtrichtung verlaufenden Reihe nebeneinander angeordnet sind, nach oben geschwenkt werden.

Hierzu ist es bekannt, die Rechkreisel an auskragenden Tragarmen anzulenken, die am Maschinenrahmen gelenkig gelagert und üblicherweise um eine liegende, in Fahrtrichtung weisende Tragarmschwenkachse zusammen mit dem daran befestigten Rechkreisel nach oben geklappt werden können. Die Verschwenkbarkeit der Tragarme wird dabei regelmäßig nicht nur dazu genutzt, den Rechkreisel in eine im Wesentlichen senkrecht nach oben stehende Straßentransportstellung zu schwenken, sondern auch auf dem Feld in eine nur ein Stück weit nach oben geschwenkte Feldtransportstellung auszuheben, in der die Rechzinken der Kreisel nicht über bereits zusammengerechte Schwaden kratzen, vgl. DE 90 14 438 U1.

Ein Problem bei derartigen schwenkbar aufgehängten Rechkreiseln von Kreiselschwadern ist dabei jedoch die Höhe der Rechkreisel in der nach oben geschwenkten Transportstellung. Sind die Rechkreisel senkrecht nach oben in die Straßentransportstellung geschwenkt, können die Rechkreisel höher nach oben ragen als das Dach des Schleppers, so dass bei niedrigen Durchfahrtshöhen Probleme entstehen können. Zum anderen wird das Fahrverhalten des Schwaders instabil, da der Schwenkpunkt sehr stark nach oben wandert.

Um hier Abhilfe zu schaffen, wurde bereits vorgeschlagen, die Tragarme teleskopierbar auszubilden, so dass in der abgesenkten Arbeitsstellung durch Ausfahren der Tragarme die Rechkreisel in der gewünschten Lage positionierbar und eine große Rechbreite erzielbar ist, während in der nach oben geschwenkten Transportstellung die Tragarme einteleskopiert werden, um die Höhe zu begrenzen. Eine solche Anordnung von Rechkreiseln zeigt die DE 43 40 384 B4 oder DE 197 16 379 C1.

Bei derartigen Heuwerbungsmaschinen sind die Rechkreisel zum Zwecke der Bodenanpassung an den genannten Tragarmen üblicherweise um eine in Fahrtrichtung weisende Achse schwenkbar aufgehängt, so dass beim Überfahren von Bodenunebenheiten ein Tastfahrwerk unter den Rechkreiseln die Ausrichtung der Rechzinken zum Boden anpassen kann. Hierbei entsteht jedoch beim Ausheben der Rechkreisel bisweilen das Problem, dass die nach unten weisenden Rechzinken durch Verkippen des ganzen Rechkreisels gegenüber dem Tragarm in den Boden stechen. Um hier Abhilfe zu schaffen, sieht die Schrift DE 692 09 361 T2 eine spezielle Maschinenrahmenausbildung vor, bei der die Anlenkpunkte der Tragarme am Maschinenrahmen sehr weit nach oben gezogen sind, um in der Arbeitsstellung eine nach unten hängende Ausrichtung der Tragarme realisieren und hierdurch wiederum - in Verbindung mit einer exzentrischen Kreiselgelenksachse - eine bestimmte Kippbewegung des Rechkreisels erzielen zu können. Die nach oben gezogene Anlenkung der Tragarme am Maschinenrahmen führt jedoch dazu, dass die Rechkreisel in der Transportstellung besonders weit nach oben geschwenkt werden, was selbst durch eine teleskopierbare Ausbildung der Tragarme nicht zur Gänze kompensiert werden kann.

Aus der EP 20 57 890 ist ein Kreiselschwader bekannt, bei dem der Kreiselrechen mittels eines Tragarms nach oben geschwenkt werden kann, wobei die Schwenkachse des Tragarms sowohl gegenüber einer horizontalen Ebene als auch gegenüber einer vertikalen Ebene spitzwinklig verkippt ist und wobei zusätzlich der Tragarm abknickbar ausgebildet ist. Ferner ist aus der EP 04 84 794 A2 ein Kreiselschwader bekannt, bei dem der Kreiselrechen mittels eines Tragarms nach oben geschwenkt werden kann, dessen Schwenkachse in Fahrtrichtung weist. Zusätzlich kann der Maschinenrahmen, an den der Tragarm angelenkt ist, um eine zusätzliche Achse abgeknickt werden, um den Schwerpunkt weiter abzusenken. Ferner ist aus der EP 06 00 304 A1 ein Kreiselschwader in Form eines Frontanbaugeräts zum Frontanbau an einen Traktor bekannt, dessen Rechkreisel mittels eines Tragarms verschwenkt werden können, dessen Schwenkachse räumlich gegenüber der Fahrtrichtung verkippt ist.

Weiterhin zeigt die DE 41 42 000 einen Schwader mit zwei Rechkreiseln, die mittels Tragarmen um liegende Achsen nach oben in Transportstellungen geschwenkt werden können. Der Maschinenrahmen umfasst hierbei einen schräg zur Fahrtrichtung verlaufenden Abschnitt, so dass ein Rechkreisel um eine in Fahrtrichtung weisende Tragarmschwenkachse und der andere Rechkreisel um eine schräg zur Fahrtrichtung verlaufende Tragarmschwenkachse nach oben schwenkbar ist.

Bei solchen Tragarmkonstruktionen mit schief stehenden bzw. verkippten Tragarmschwenkachsen entstehen jedoch relativ hohe Belastungen an den Tragarmschwenkachsen, da die großen Rechkreisel in der Transportstellung über die schief stehenden Tragarme beachtliche Lagermomente in die Tragarmschwenkachsen induzieren.

Von der genannten Höhenproblematik abgesehen ist bei derartigen Heuwerbungsmaschinen darauf zu achten, dass in der Transportstellung mit nach oben geklappten Kreiseln keine übermäßige Maschinenhöhe entsteht, sondern dass auch eine möglichst geringe Spurbreite erzielt und die Rechkreisel nicht zu weit seitlich nach außen abstehen. Werden die Rechkreisel in der genannten Weise in eine etwa vertikale Transportstellung verbracht, stehen die Zinken der Rechkreisel zumindest teilweise nach außen, was eine entsprechende Kollisions- und Verletzungsgefahr mit sich bringen kann. Zum anderen besitzen die Rechkreisel oftmals noch eigene Tastfahrwerke, die in der genannten aufrechten Transportstellung ebenfalls nach außen weisen und über die gewünschte, einzuhaltende Spurbreite überstehen können.

Um die Spurbreite in der Transportstellung mit nach oben geschwenkten Rechkreiseln möglicht stark verringern zu können, wird an sich vorgesehen, die Tragarmschwenkachsen, um die die Tragarme gegenüber dem Maschinenrahmen verschwenkt werden können, möglichst weit nach innen in die Mitte hinein bzw. an die Längsmittelebene heran zu verschieben, so dass die Transportkonfiguration mit nach oben geschwenkten Tragarmen sehr schmal wird. Dies führt allerdings zu sehr langen Tragarmen, da die Rechkreisel in der abgesenkten Arbeitsposition bei entsprechend großem Kreiseldurchmesser quer zur Fahrtrichtung ausreichend weit auseinander gesetzt sein müssen, um die Rechkreisel und deren Rechbreite effektiv nutzen zu können. Diese Problematik verschärft sich insbesondere dann, wenn es sich um einen sog. Mittelschwader handelt, der den zusammenzurechenden Schwad in der Mitte zwischen den nach rechts und links auskragenden Kreiseln ablegt, da hier in der Arbeitsposition zu den Rechkreiseldurchmessern auch noch die Breite des abzulegenden Schwads hinzuzurechnen ist, was zu besonders großen Tragarmlängen führt.

Je länger die Tragarme werden, desto größer wird an sich die Transporthöhe, wenn beim Straßentransport die Rechkreisel in näherungsweise vertikale Transportstellungen verbracht werden. Alternativ muss bei teleskopierbaren Tragarmen eine immer größere Teleskopierbarkeit bzw. Längenveränderbarkeit vorgesehen werden, um bei immer längeren Tragarmen dennoch eine nur begrenzte Transporthöhe einhalten zu können. Große Teleskopierbarkeiten führen jedoch nicht nur zu relativ verwindungslabilen und verschleißanfälligen Tragarmkonstruktionen, sondern auch zu Problemen bei der Ausbildung des Hubschwenkantriebs. Werden die üblicherweise verwendeten Aushubzylinder unmittelbar an den einfahrbaren bzw. teleskopierbaren Aufhängungsstücken angelenkt, an denen die Rechkreisel aufgehängt sind, kommt es beim Anheben zu einem Querversatz der Rechkreisel und einem entsprechenden Radieren der Tasträder über den Boden. Werden indes die Aushubzylinder an dem innersten nicht teleskopierbaren Tragarmteil angelenkt, ergeben sich ungünstige Hebelverhältnisse, wobei für das Ein- und Austeleskopieren zusätzliche Stellaktoren benötigt werden, was den Hubschwenkantrieb insgesamt aufwändig und kinematisch relativ kompliziert macht.

Hiervon ausgehend liegt der vorliegenden Erfindung die Aufgabe zugrunde, eine verbesserte Heuwerbungsmaschine der genannten Art zu schaffen, die Nachteile des Standes der Technik vermeidet und Letzteren in vorteilhafter Weise weiterbildet. Insbesondere soll trotz sehr großer Arbeitsbreite eine sehr kleine Transportbreite und Transporthöhe erzielt werden, ohne dies durch eine komplizierte, vielachsige Kinematik und vielteilige, aufwändige Ausbildung des Hubschwenkantriebs erkaufen zu müssen.

Erfindungsgemäß wird diese Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, für die Transportstellung die Tragarme über die Vertikale hinaus zur gegenüberliegenden Seite hin zu verschwenken und die Rechkreisel gegenüber den Tragarmen gegenläufig zu verkippen, so dass die Rechkreisel in der Transportstellung trotz überstreckter bzw. schräg verkippter Tragarme im Wesentlichen aufrecht stehen. Ein in Arbeitsposition auf der rechten Seite befindlicher Tragarm ist also in der Transportstellung über die Vertikale hinaus zu linken Seite hin verkippt, während umgekehrt ein in Arbeitsstellung auf der linken Seite des Maschinenrahmens befindlicher Tragarm in der Transportstellung über die Vertikalstellung hinaus zur rechten Seite hin verkippt ist. Hierdurch kommen die oberen Enden der Tragarme und die an den Tragarmen angelenkten Rechkreisel in der Transportstellung ganz innen, d.h. ganz nahe an der vertikalen Längsmittelebene zu liegen, ohne dass hierfür die Tragarmschwenkachsen entsprechend weit nach innen gerückt werden müssten. Die Tragarmschwenkachsen können von besagter vertikalen Längsmittelebene zu den Arbeitsseiten der Rechkreisel hin beabstandet angeordnet werden, so dass die nach oben zu schwenkenden Tragarmteile entsprechend verkürzt sind und eine niedrige Transporthöhe auch ohne große Teleskopierbarkeit bzw. Verschiebbarkeit des Aufhängungsstückes, an dem die Rechkreisel aufgehängt sind, erreicht werden kann. Durch die zur Überstreckung der Tragarme gegenläufige Verkippung der Rechkreisel verbleiben die Rechkreisel in der Transportstellung in einer näherungsweise vertikalen Ausrichtung, wodurch einerseits gegenseitige Kollisionen der Rechkreisel vermieden und andererseits eine in Fahrtrichtung betrachtet sehr schmale Silhouette erreicht werden kann. Erfindungsgemäß ist vorgesehen, dass die Tragarme nach oben über eine Vertikalstellung hinaus schwenkbar sind und in der Transportstellung gegenüber der Vertikalen spitzwinklig zur gegenüberliegenden Seite, die der Arbeitsstellungsseite des jeweiligen Rechkreisels gegenüberliegt, hin geneigt sind, wobei die Rechtkreisel in der genannten Transportstellung gegenüber ihrem jeweiligen Tragarm um die Kreiselkippachse in eine gegenläufig verkippte Stellung steuerbar sind derart, dass die Rechkreiselebene, die sich senkrecht zur Kreiselachse erstreckt, zum Tragarm spitzwinklig geneigt ist und im Wesentlichen senkrecht ausgerichtet ist. Hierdurch können in der Arbeitsstellung auch sehr breite Maschinen ohne überlange Tragarme bzw. übergroße Teleskopierbarkeiten in eine Transportstellung mit sehr niedriger Transporthöhe und schmaler Transportbreite verbracht werden.

Insbesondere können Schwader mit einem Kreiseldurchmesser von 2,7 m und mehr in eine Transportkonfiguration mit einer Transportbreite von 2,55 m oder weniger und einer Transporthöhe von 4 m oder weniger verbracht werden, wobei die genannte Transportkonfiguration auch bei noch größeren Rechkreiseln im Bereich von 3 m bis 3,5 m eingehalten werden kann. Selbst bei Rechkreiseln mit Durchmessern von bis zu 4,5 m kann die genannte Transportbreite von 2,55 m noch eingehalten werden.

Vorteilhafterweise sind die Tragarme und deren Kinematik derart ausgebildet, dass die Rechkreisel in der Transportstellung in Fahrtrichtung betrachtet innerhalb der vom Fahrwerk des Maschinenrahmens vorgegebenen Spurbreite angeordnet sind. Insbesondere kann das Fahrwerk des Maschinenrahmens in der Transportstellung die maximale Maschinenbreite vorgeben, wobei vorteilhafterweise die Spurbreite des Fahrwerks des Maschinenrahmens entsprechend dem maximal gewünschten bzw. zulässigen Breitenmaß für den Straßentransport entsprechen kann, insbesondere etwa 2,55 m.

Um einerseits den Tragarmen für das Ausheben in die Vorgewendestellung einen ausreichenden Hebelarm und damit Hub zu geben, andererseits jedoch eine möglichst schmale Transportkonfiguration erreichen zu können, ist in Weiterbildung der Erfindung vorgesehen, dass die Tragarme in der Transportstellung etwa 5° bis 20°, vorzugsweise etwa 10° +/-3° gegenüber der Vertikalen zur gegenüberliegenden Seite hin verkippt sind. Hierdurch kann die Tragarmschwenkachse ein Stück weit von der Längsmittelebene zur Arbeitsstellung des zugehörigen Rechkreisels hin beabstandet sein, wodurch sich eine günstige Tragarmlänge ergibt, die einerseits lang genug ist, um das Ausheben in die Vorgewendestellung mit ausreichend großer Bodenfreiheit zu ermöglichen, andererseits aber die notwendige schmale Transportbreite ermöglicht.

Alternativ oder zusätzlich können in Weiterbildung der Erfindung die Rechkreisel gegenüber dem jeweils zugehörigen Tragarm, an dem der jeweilige Rechkreisel angelenkt ist, um etwa 5° bis 20°, vorzugsweise etwa 10° +/-3° gegenläufig verkippt werden. In der Transportstellung steht der jeweilige Rechkreisel mit seiner Rechkreiselebene, die senkrecht auf die Drehachse des Rechkreisels steht, um das genannte Winkelmaß spitzwinklig zum Tragarm geneigt, so dass die Überstreckung des Tragarms näherungsweise kompensiert wird und die Rechkreisel näherungsweise vertikal stehen.

Um eine ausreichend große Verstellbarkeit des Abstands der Kreiselkippachse von der Tragarmschwenkachse zu ermöglichen, ohne hierfür die Anlenkung und Ausbildung des Hubschwenkantriebs zu beeinträchtigen, sind die Rechkreisel in Weiterbildung der Erfindung jeweils um die genannte Kreiselkippachse schwenkbar an einem Schlitten gelagert, der an dem jeweiligen Tragarm entlang dessen Längsachse verfahrbar gelagert ist. Der Tragarm selbst kann hierbei längenunveränderbar, insbesondere als starrer Balken ausgebildet sein, entlang dessen der genannte Schlitten verfahrbar ist, um den Rechkreisel näher an die Tragarmachse bringen zu können, wenn der Tragarm nach oben in die Transportstellung geschwenkt wird. Durch einen solchen verfahrbaren Schlitten kann auf eine Teleskopierbarkeit der Tragarme verzichtet werden, wodurch entsprechende Instabilitäten und aufwändige Konstruktionen vermieden werden.

Die Verstellvorrichtung, mittels derer der besagte Schlitten beim Nach-oben-Schwenken der Tragarme näher zur Tragarmschwenkachse verfahren werden kann, kann grundsätzlich verschieden ausgebildet sein, wobei ein Schiebeelement zur Verschiebung des Schlittens vorteilhafterweise an einem maschinenfesten Anlenkpunkt einerseits und einem schlittenfesten Anlenkpunkt andererseits angelenkt sein kann, insbesondere derart, dass beim Nach-oben-Schwenken aufgrund der gewählten Anlenkpunkte automatisch eine zwangsweise Verkürzung bzw. Nachinnen-Verschiebung der Rechkreisel stattfindet. Das genannte Verschiebeelement kann hierbei grundsätzlich verschieden ausgebildet sein, ggf. auch eine längenveränderbare Stellaktoreneinheit beispielsweise in Form eines Druckmittelzylinders umfassen, wodurch der Verstellbereich noch weiter vergrößert werden kann. In vorteilhafter Weiterbildung der Erfindung kann jedoch auch eine einfache Schubstange Verwendung finden, die die Verschiebung des vorgenannten Schlittens am Tragarm allein aus der Schwenkbewegung des Tragarms ableitet, wobei die genannte Schubstange gänzlich starr und längenunveränderbar ausgebildet sein kann. In Weiterbildung der Erfindung kann die genannte Schubstange jedoch auch längeneinstellbar ausgebildet sein, beispielsweise in Form eines Spindenelements, um verschiedene Arbeitspositionen bzw. Transportstellungen voreinstellen zu können. In Betrieb bleibt die Schubstange dann aber bei der fest eingestellten Länge, so dass die Verschiebung des Schlittens, an dem der jeweilige Rechkreisel aufgehängt ist, durch die Schwenkbewegung des Tragarms bestimmt wird und aus den Anordnungen der Anlenkpunkte resultiert.

Vorteilhafterweise kann der maschinenfeste Anlenkpunkt des genannten Schiebeelements von der Tragarmschwenkachse beabstandet angeordnet sein, und zwar vorteilhafterweise etwa auf derselben Höhe liegend zur Außenseite der Maschine hin, d.h. zu der rechten oder linken Seite hin, auf der der Rechkreisel in Arbeitsposition angeordnet ist. Durch einen solchen außenliegenden maschinenfesten Anlenkpunkt kann eine maximale Stell- bzw. Schiebebewegung des Schlittens bei günstigen Hebelverhältnissen erzielt werden. Insbesondere kann der maschinenfeste Anlenkpunkt des Schiebeelements derart von der Tragarmschwenkachse beabstandet und angeordnet sein, dass in der abgesenkten Arbeitsstellung des Tragarms der genannte maschinenfeste Anlenkpunkt zumindest näherungsweise auf einer Verbindungsgeraden liegt, die die genannte Tragarmschwenkachse mit der Kreiselkippachse verbindet. Hierdurch ergibt sich in der abgesenkten Arbeitsstellung ein maximales Ausfahren des Rechkreisels, während umgekehrt in der überstreckten, zur gegenüberliegenden Seite hin verkippten Transportstellung ein relativ starkes Einfahren erreicht wird, ohne hier übermäßige Stellkräfte zu erzeugen. Insbesondere kann durch die genannte Wahl des maschinenfesten Anlenkpunktes für das Schiebeelement auch für das Ausheben in die Vorgewendestellung eine günstige Kinematik erzielt werden, insbesondere dahingehend, dass beim Ausheben in die Vorgewendestellung der Schlitten zunächst gar nicht und insgesamt nur wenig verschoben wird und dementsprechend der Rechkreisel beim Ausheben in die Vorgewendestellung nur einen geringen Querversatz erfährt. Insbesondere kann unmittelbar zu Beginn des Aushebens aus der Arbeitsposition ein Querradieren der Räder auf dem Boden vermieden werden, da in diesem anfänglichen Stellbereich mehr oder minder gar keine Querbewegung auftritt, da das genannte Schiebeelement in diesem anfänglichen Hubbereich noch keinen Hebelarm bezüglich der Tragarmschwenkachse hat.

Um eine ausreichend große Verschiebebewegung des Aufhängungsstücks, an dem der jeweilige Rechkreisel aufgehängt ist, entlang der Tragarmlängsachse erreichen zu können, ist in vorteilhafter Weiterbildung der Erfindung der maschinenrahmenfeste Anlenkpunkt des genannten Schiebeelements von der Tragarmschwenkachse um eine Strecke beabstandet, die in etwa 1/8 bis 1/4, vorzugsweise etwa 1/7 bis 1/5 und insbesondere etwa 1/6 der Länge des Schiebeelements entspricht.

In vorteilhafter Weiterbildung der Erfindung sind die Tragarmschwenkachsen von einer vertikalen Längsmittelebene, die durch den Maschinenrahmen geht, um eine Strecke beabstandet, die in etwa 10 % bis 30 %, insbesondere etwa 20 % bis 30 % des Abstands beträgt, den die Kreiselkippachse in der abgesenkten Arbeitsstellung von der Tragarmschwenkachse einnimmt. Alternativ oder zusätzlich zu dieser Querbeabstandung der Tragarmschwenkachsen nach außen hin sind die Tragarmschwenkachsen in einer Höhe am Maschinenrahmen angeordnet, die zumindest 150 %, vorzugsweise etwa 200 % bis 300 % der Höhe der die Rechzinken tragenden Zinkentragarme der Rechkreisel beträgt. Unabhängig von der Höhe der Zinkenkreiseltragarme sind die Tragarmschwenkachsen, um die die Tragarme der Rechkreisel gegenüber dem Maschinenrahmen schwenkbar sind, in jedem Fall höher angeordnet als die Kreiselkippachsen, wobei die Höhe der Tragarmschwenkachsen über dem Boden vorteilhafterweise etwa 120 % bis 200 % der Höhe der Kreiselkippachsen über dem Boden betragen kann.

Vorteilhafterweise können die Tragarmschwenkachsen derart angeordnet sein, dass sich die Kreiseltragarme in der abgesenkten Transportstellung spitzwinklig zur Horizontalen nach unten geneigt erstrecken, vorzugsweise unter einem Winkel von etwa 10° bis 30°, insbesondere etwa 20° gegenüber der Horizontalen. Durch diese nach außen hängende Anordnung der Tragarme kann eine günstige Kinematik für den Aushub der Tragarme und das dabei erfolgende Zusammenschieben der Rechkreisel erzielt werden.

In Weiterbildung der Erfindung sind die genannten Tragarme durch jeweils eine Hubzylindereinheit verschwenkbar, die einerseits an einem maschinenrahmenfesten Anlenkpunkt und andererseits an einem tragarmfesten Anlenkpunkt angelenkt ist. Als Hubzylindereinheit kann hier insbesondere ein Hydraulikzylinder vorgesehen sein, ggf. jedoch auch ein anderer längenveränderbarer Stellaktor wie beispielsweise eine Hubspindel. Die Hubzylindereinheit kann hierbei in an sich konventioneller Weise einzylindrig ausgebildet sein, aber auch mehrere Zylinder umfassen, beispielsweise zwei auf gegenüberliegenden Enden einer gemeinsamen Kolbenstange angeordnete Zylinder, beispielsweise dergestalt, dass ein Zylinder auf einem Ende der Kolbenstange einen Gewichtsentlastungszylinder bilden kann, während der auf der gegenüberliegenden Seite der Kolbenstange vorgesehene Zylinder den eigentlichen Hubzylinder bildet.

Um auch bei relativ großem Stellweg des Zylinders eine kompakte und hinsichtlich der Hebelverhältnisse günstige Zylinderanlenkung zu ermöglichen, ist hierbei in Weiterbildung der Erfindung vorgesehen, dass die genannten Hubzylindereinheiten hierbei jeweils mit einem Kragen eines Zylinders angelenkt sind, so dass die beiden vorgenannten maschinenfesten und tragarmfesten Anlenkpunkte näher zueinander rücken können, da durch die Anlenkung am Kragen im Wesentlichen der gesamte Abstand zwischen den beiden Anlenkpunkten als Hubweg bzw. Stellweg zur Verfügung steht.

Alternativ oder zusätzlich zu einer solchen Kragenanlenkung ist der maschinenfeste Anlenkpunkt der Hubzylindereinheiten jeweils auf der gegenüberliegenden Seite der vertikalen Längsmittelebene angeordnet, d.h. der in Arbeitsposition auf der rechten Maschinenseite befindliche Rechkreisel wird durch eine Hubzylindereinheit ausgehoben, deren maschinenfester Anlenkpunkt auf der linken Maschinenseite vorgesehen ist, während der in Arbeitsposition auf der linken Seite befindliche Rechkreisel von einer Hubzylindereinheit ausgehoben wird, deren maschinenfester Anlenkpunkt auf der rechten Maschinenseite ist. Durch einen solchen Querversatz der Anlenkpunkte zu gegenüberliegenden Maschinenseiten hin kann einerseits ein langer Stellweg erreicht werden, während andererseits trotz Verschwenken der Tragarme in die Transportstellung über die Vertikale hinaus ein ausreichender Hebelarm erhalten bleibt, um die Tragarme auch in der Transportstellung ohne übermäßige Stellkräfte durch die genannten Zylindereinheiten betätigen zu können.

In vorteilhafter Weiterbildung der Erfindung können die maschinenrahmenfesten Anlenkpunkte der Hubzylindereinheiten oberhalb der Tragarmschwenkachsen angeordnet sein, vorteilhafterweise an Anlenkkonsolen, die vom Maschinenrahmen nach oben weg auskragen. In vorteilhafter Weiterbildung der Erfindung können die maschinenrahmenfesten Anlenkpunkte der Hubzylindereinheiten etwa 20 % bis 80 % der Strecke, die dem Abstand der Tragarmschwenkachse von dem tragarmfesten Anlenkpunkt der Hubzylindereinheit entspricht, oberhalb der Tragarmschwenkachse angeordnet sein. Alternativ oder zusätzlich kann der Querversatz der maschinenrahmenfesten Anlenkpunkte der Hubzylindereinheiten von der vertikalen Längsmittelebene näherungsweise dem Querversatz der Tragarmschwenkachsen von besagter Längsmittelebene entsprechen, vorzugsweise etwa 50 % bis 90 % des Querversatzes der Tragarmschwenkachse von der Längsmittelebene betragen, wobei vorteilhafterweise die maschinenrahmenfesten Anlenkpunkte der Hubschwenkzylinder zur gegenüberliegenden Seite der Längsmittelebene hin angeordnet sind, d.h. der maschinenrahmenfeste Anlenkpunkt des Hubzylinders, der einen rechten Tragarm ausheben kann, ist zur linken Seite hin angeordnet und umgekehrt.

Die Erfindung wird nachfolgend anhand eines bevorzugten Ausführungsbeispiels und zugehöriger Zeichnungen näher erläutert. In den Zeichnungen zeigen:
- Fig. 1:: eine Draufsicht auf eine Heuwerbungsmaschine in Form eines Mittelschwaders nach einer vorteilhaften Ausführung der Erfindung,
- Fig. 2:: eine schematische Heckansicht der Heuwerbungsmaschine aus Fig. 1 von hinten in einer Blickrichtung entsprechend der Fahrtrichtung, wobei die Heuwerbungsmaschine mit abgesenkten Rechkreiseln in ihrer Arbeitsstellung dargestellt ist,
- Fig. 3:: eine Heckansicht der Heuwerbungsmaschine ähnlich Fig. 2, wobei die Rechkreisel in ihrer ausgehobenen Transportstellung dargestellt sind, und
- Fig. 4:: eine schematische Seitenansicht der Heuwerbungsmaschine aus den vorhergehenden Figuren in einer Blickrichtung quer zur Fahrtrichtung, wobei die Rechkreisel ähnlich Fig. 3 in der ausgehobenen Transportstellung dargestellt sind.

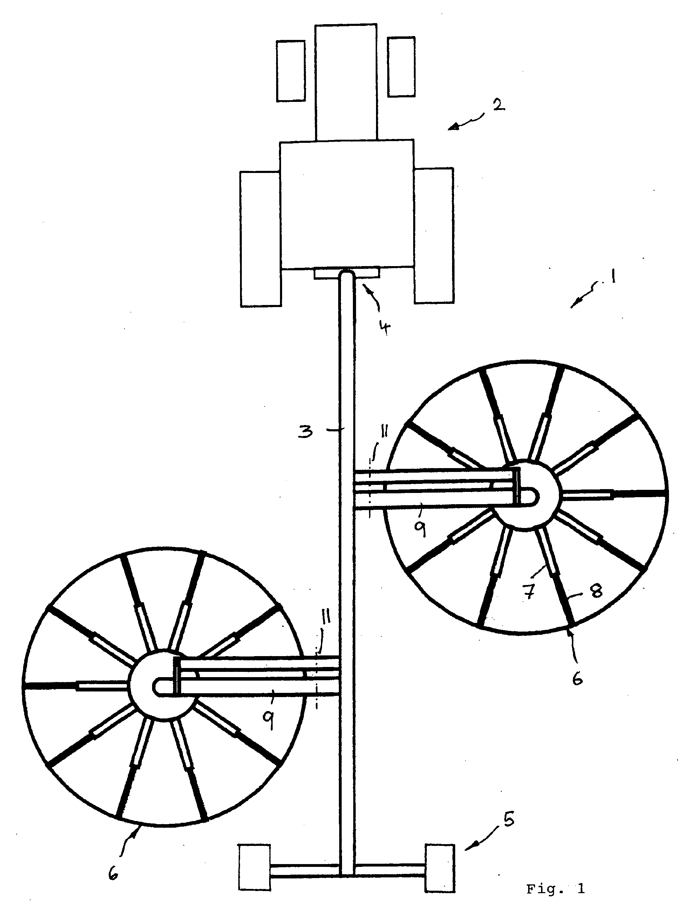

Der in Fig. 1 gezeigte Kreiselschwader 1 ist in an sich bekannter Weise an das Heck eines Schleppers 2 anbaubar. Hierzu umfasst der Maschinenrahmen 3 des Kreiselschwaders 1 in an sich bekannter Weise an seinem vorderen Ende eine geeignete Ankupplungsvorrichtung 4.

Der genannte Maschinenrahmen 3 ist im Wesentlichen in Form eines sich in Fahrtrichtung erstreckenden Längsrahmens ausgebildet, der, wie Fig. 1 zeigt, mittels eines Fahrwerks 5, das vorteilhafterweise am Heck des Maschinenrahmens 3 angeordnet sein kann, am Boden abgestützt wird.

Der Kreiselschwader 1 kann hierbei als Mehrkreiselschwader, insbesondere Zweikreiselschwader ausgebildet sein, der in Fahrtrichtung betrachtet rechts und links vom Maschinenrahmen 3 jeweils einen oder auch mehrere Rechkreisel 6 aufweist. Jeder Rechkreisel umfasst dabei in an sich bekannter Weise eine Vielzahl von sternförmig angeordneten Zinkenträgern 7, die an ihren auskragenden Enden Rechzinken 8 tragen und in der Arbeitsstellung um aufrechte Kreiselachsen umlaufen. Dabei werden die genannten Zinken auf ihrer Umlaufbahn zyklisch jeweils um ihre Längsachsen verdreht, so dass die Rechzinken in einem Sektor ihrer Umlaufbahn nach unten geschwenkt über den Boden fahren und darauf liegendes Erntegut zusammenrechen und in einem anderen Sektor der Umlaufbahn nach oben schwenken, um das zusammengerechte Erntegut in einem Schwad abzulegen.

Die beiden Rechkreisel 6 können dabei in Fahrtrichtung betrachtet zueinander versetzt oder unversetzt angeordnet sein, wobei nach einer Ausführung der Erfindung eine in Fahrtrichtung versetzte Anordnung der beiden Rechkreisel 6 gegenüberliegend auf beiden Seiten des Maschinenrahmens 3 vorteilhaft sein kann.

Jeder der Rechkreisel 6 ist dabei mittels eines Tragarms 9, der vom Maschinenrahmen 3 quer auskragt, an dem genannten Maschinenrahmen 3 angelenkt. Der Tragarm 9 erstreckt sich dabei in der abgesenkten Arbeitsstellung, die Fig. 1 zeigt, im Wesentlichen senkrecht zur Längsachse des Maschinenrahmens 3 bzw. senkrecht zur Fahrtrichtung nach außen hin abfallend bzw. hängend. Die Rechkreisel 6 können dabei an einem äußeren Ende der genannten Tragarme 9 jeweils gelenkig aufgehängt sein, so dass, über das unter den Rechkreiseln 6 angeordnete Tastfahrwerk 10 eine entsprechende Bodenanpassung erfolgen kann.

Die genannten vom Maschinenrahmen 3 quer auskragenden Tragarme 9 sind dabei an dem Maschinenrahmen 3 um jeweils eine Tragarmschwenkachse 11 schwenkbar angelenkt und können mittels einer geeigneten Hub- bzw. Schwenkvorrichtung beispielsweise in Form von Hydraulikzylindern aus der in Fig. 1 gezeigten, abgesenkten Arbeitsstellung in eine ausgehobene Transportstellung nach oben geschwenkt werden. Hierbei können die genannten Tragarme 9 nur ein Stück weit in eine angehobene Feldtransportstellung oder Vorgewendestellung gebracht werden, oder auch ganz nach oben in eine Straßentransportstellung geschwenkt werden.

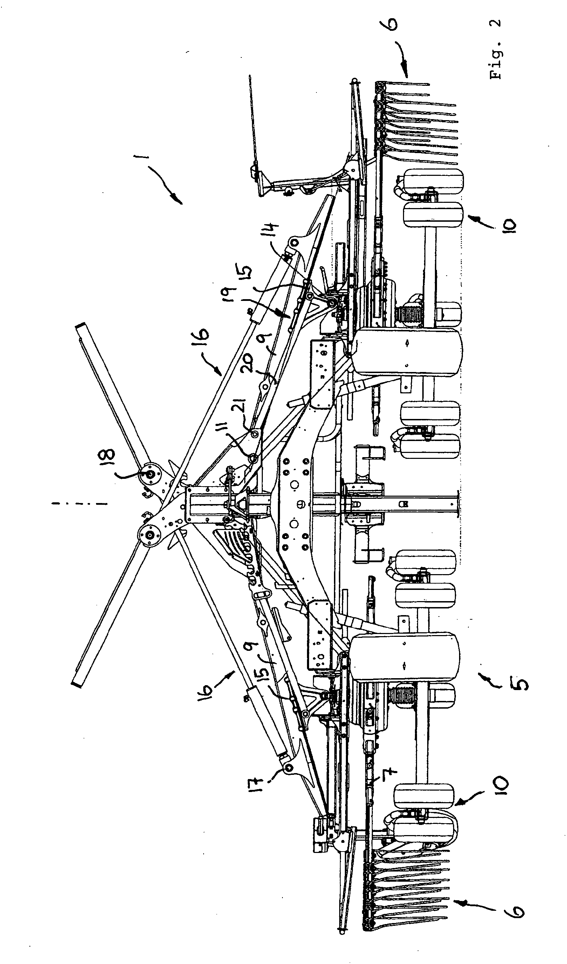

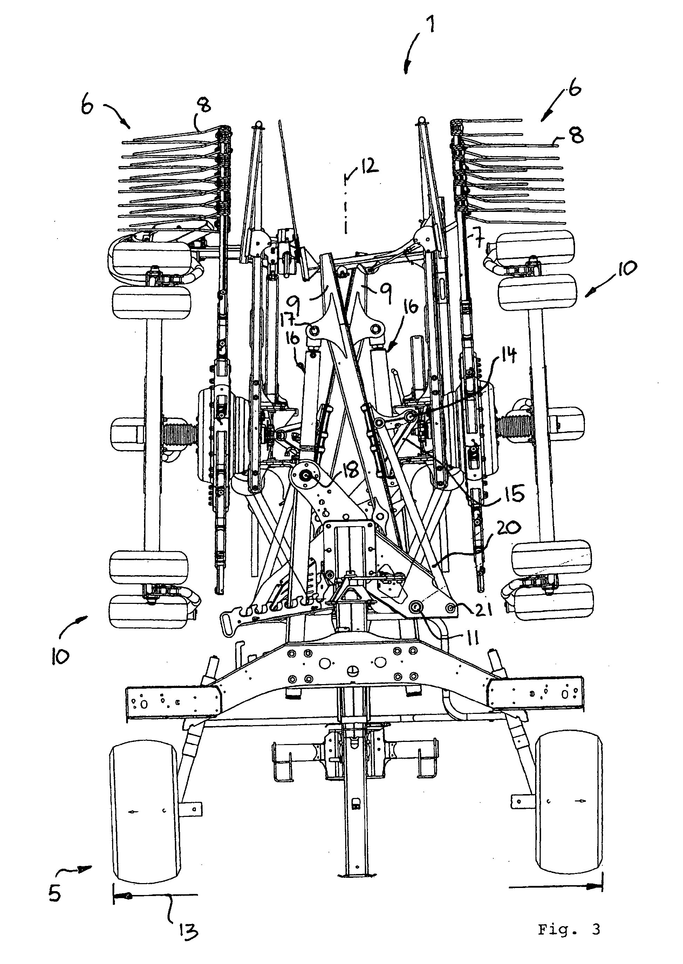

Wie Fig. 2 und Fig. 3 zeigen, erstrecken sich die genannten Tragarmschwenkachsen 11 von der vertikalen Längsmittelebene 12 beabstandet etwa liegend in Fahrtrichtung, wobei die Tragarmschwenkachsen 11 nach außen zu der Seite hin beabstandet sind, zu der der Tragarm sich in der Arbeitsstellung erstreckt. Die Beabstandung von der Längsmittelebene 12 entspricht dabei etwa 1/5 bis 1/3, insbesondere etwa 1/4 der halben Fahrwerks-Spurbreite, wobei die Tragarmschwenkachsen 11 etwa 1/3 bis 2/3 der gesamten Spurbreite 13 über dem Boden angeordnet sind. Bezogen auf die Länge der Tragarme 9, genauer gesagt bezogen auf den Abstand zwischen der Kreiselkippachse 14 von der zugehörigen Tragarmschwenkachse 11 in der abgesenkten Arbeitsstellung, ist die Tragarmschwenkachse 11 etwa 1/4 des besagten Abstandes von der Längsmittelebene 12 beabstandet, vgl. Fig. 2.

Die Tragarme 9 sind hierbei derart angelenkt und ausgebildet, dass sie sich in der abgesenkten Arbeitsstellung unter einem Winkel von etwa 20° zur Horizontalen hängend nach außen erstrecken, vgl. Fig. 2.

Die Rechkreisel 6 sind hierbei an Schlitten 15 aufgehängt, die in Längsrichtung der Tragarme 9 an den genannten Tragarmen 9 verschieblich gelagert sind, so dass die Rechkreisel 6 beim Nach-oben-Schwenken der Tragarme 9 an diesen entlang verfahren werden können.

Die Rechkreisel 6 sind hierbei an besagten Schlitten 15 verkippbar angelenkt, und zwar um die schon genannten Kreiselkippachsen 14, die sich im Wesentlichen liegend parallel zur Fahrtrichtung erstrecken.

Wie Fig. 2 zeigt, erstrecken sich die Tragarme 9 hierbei auch in der abgesenkten Arbeitsstellung über die genannten Schlitten 15 hinaus, d.h. die Tragarme 9 sind länger ausgebildet als der Abstand der Schlitten 15 von den Tragarmschwenkachsen 11. Hierdurch können die Hubzylindereinheiten 16 außerhalb der Anlenkstellen der Rechkreisel 6 an den Tragarmen 9 angelenkt werden, wie noch erläutert wird, vgl. Fig. 2.

Die genannten Hubzylindereinheiten 16 sind hierbei einerseits an tragarmfesten Anlenkpunkten 17 gelenkig an den Tragarmen 9 angelenkt, wobei die besagten Anlenkpunkte 17 außerhalb der Schlitten 15 liegen, wobei vorteilhafterweise der Abstand der besagten Anlenkpunkte 17 von den Tragarmschwenkachsen 11 etwa 110 % bis 140 %, vorzugsweise etwa 125 % des Abstands der Kreiselkippachsen 14 von den Tragarmschwenkachsen 11 in der abgesenkten Arbeitsstellung betragen kann.

Mit ihren anderen Enden sind die Hubzylindereinheiten 16 an maschinenrahmenfesten Anlenkpunkten 18 angelenkt, die oberhalb des Maschinenrahmens 3 zur gegenüberliegenden Seite der Maschine hin versetzt angeordnet sind. Genauer gesagt sind hierbei nicht die Enden der Hubzylindereinheiten 16, sondern der Kragen der Zylinder angelenkt, aus der die Kolbenstange ausfahrbar ist, vgl. Fig. 2 und Fig. 3. Die Hubzylinder erstrecken sich über die genannten maschinenrahmenfesten Anlenkpunkte 18 hinaus, um eine größere Hublänge realisieren zu können. Vorteilhafterweise erstrecken sich die maschinenrahmenfesten Anlenkpunkte 18 hierbei sowohl oberhalb als auch zur gegenüberliegenden Seite hin versetzt. Während beispielsweise der in Arbeitsposition auf der rechten Seite liegende Tragarm 9 seine Tragarmschwenkachse 11 ebenfalls auf der rechten Seite der Längsmittelebene 12 nach außen hin versetzt besitzt, liegt der maschinenrahmenfeste Anlenkpunkt 18 des diesen rechten Tragarm 9 verstellenden Hubzylinders auf der linken Seite der besagten Längsmittelebene 12. Entsprechendes gilt umgekehrt für den linken Tragarm, vgl. Fig. 2.

In den genannten Anlenkpunkten 17 und 18 sind die Hubzylindereinheiten 16 gelenkig angelenkt, zumindest jeweils um eine liegende, in Fahrtrichtung weisende Schwenkachse, so dass die Hubzylindereinheiten 16 entsprechend verschwenken können.

Wie Fig. 2 zeigt, kann jede der Hubzylindereinheiten 16 zwei Zylinder umfassen, die auf gegenüberliegenden Enden einer gemeinsamen Kolbenstange sitzen. Während der eine Zylinder, insbesondere der an seinem Kragen angelenkte größere Zylinder, der am maschinenrahmenfesten Anlenkpunkt 18 angelenkt ist, dem Ausheben des jeweiligen Rechkreisels 6 in die Transportstellung gemäß Fig. 3 dient, kann der kleinere, vorzugsweise am Tragarm 9 angelenkte Zylinder der Gewichtsentlastung und/oder dem Ausheben der Rechkreisel in die Vorgewendestellung dienen. Vorteilhafterweise können die beiden auf einer gemeinsamen Kolbenstange sitzenden Zylinder unterschiedlich große bzw. lange Stellwege umfassen.

Wie Fig. 3 zeigt, können durch Zusammenfahren der Hubzylindereinheiten 16 die Tragarme 9 mit den daran aufgehängten Rechkreiseln 6 in eine Transportstellung nach oben geschwenkt werden, wobei die Tragarme 9 jeweils über die Vertikalstellung hinaus zur gegenüberliegenden Seiten hin verschwenkt werden, so dass sich der Tragarm des rechten Rechkreisels zur linken Seite hin neigt, während sich der Tragarm des linken Kreisels zur rechten Seite hin neigt, vgl. Fig. 3. Vorteilhafterweise erstrecken sich hierbei die Tragarme 9 in der Transportstellung zur Vertikalen spitzwinklig geneigt, vorzugsweise unter einem Winkel von etwa 3° bis 20°, vorzugsweise etwa 5° bis 15° und insbesondere etwa 10°.

Dennoch erstrecken sich vorteilhafterweise die Rechkreisel 6 in der genannten Transportstellung in etwa vertikal, d.h. die zur Drehachse der Rechkreisel 6 senkrecht stehende Rechkreiselebene erstreckt sich etwa vertikal. Dies kann dadurch erreicht werden, dass die Rechkreisel um die besagten Kreiselkippachsen 14 gegenläufig zu den Tragarmen 9 verkippen, wobei die Verkippung der Rechkreiselebenen gegenüber den Tragarmen 9 vorteilhafterweise etwa ebenfalls spitzwinklig entsprechend dem Verkippungswinkel der Tragarme ist, also etwa 5° bis 15°, insbesondere etwa 10° betragen kann. Die Steuerung dieses Verkippungswinkels kann vorteilhafterweise durch Anschläge erfolgen, mit denen die Rechkreisel 6 in der Transportstellung an den Tragarmen 9 oder einem maschinenrahmenfesten Gegenanschlag anstehen. Das Verkippen bis zum Erreichen der genannten Anschläge kann hierbei schwerkraftgetrieben erfolgen, da der Schwerpunkt der Rechkreisel 8 außerhalb bzw. beabstandet von den genannten Kreiselkippachsen angeordnet ist.

Wie Fig. 3 zeigt, werden die Tragarme 9 so weit überstreckt, dass sich die Tragarme 9 in Fahrtrichtung betrachtet überkreuzen und sich jeder Tragarm 9 mit einem Abschnitt über die Längsmittelebene 12 hinaus erstreckt.

Beim Nach-oben-Verschwenken der Tragarme 9 und der daran befestigten Rechkreisel 6 werden die genannten Rechkreisel 6 an den Tragarmen 9 längsverschoben, und zwar nach innen hin, so dass sich der Abstand der Schlitten 15 und/oder der Kreiselkippachsen 14 von den Tragarmschwenkachsen 11 verkürzen. Diese Verschiebung der Schlitten 15 wird durch eine Verstellvorrichtung 19 gesteuert, die für jeden der Tragarme 9 bzw. jeden der Schlitten 15 ein Schiebeelement 20 umfasst, das als starre Schubstange ausgebildet sein kann. Wie die Figuren 2 und 3 zeigen, sind die genannten Schiebeelemente 20 hierbei einerseits gelenkig an dem Schlitten 15 und andererseits jeweils gelenkig an einem maschinenrahmenfesten Anlenkpunkt 21 angelenkt. Vorteilhafterweise ist der maschinenrahmenfeste Anlenkpunkt 21 relativ zur Tragarmschwenkachse 11 derart angeordnet, dass der genannte maschinenrahmenfeste Anlenkpunkt 21 in der abgesenkten Arbeitsstellung des Geräts zwischen der Tragarmschwenkachse 11 und dem Schlitten 15 zu liegen kommt, vgl. Fig. 2. Die Beabstandung des maschinenrahmenfesten Anlenkpunkts 21 des Schiebeelements 20 von der Tragarmschwenkachse 11 beträgt dabei vorteilhafterweise etwa 1/6 der Länge des Schiebeelements 20.

Wie Fig. 3 zeigt, wird die maximale Transportbreite des Kreiselschwaders 1 vorteilhafterweise durch die Spurbreite 13 des den Maschinenrahmen 2 abstützenden Fahrwerks 5 definiert, wobei die besagte Spurbreite 13 vorteilhafterweise in etwa dem maximal zulässigen Straßenfahrbreitenmaß entspricht und insbesondere etwa 2,55 m oder weniger betragen kann. Vorteilhafterweise sind die Rechkreisel 6 in der ausgehobenen Transportstellung vollständig innerhalb des besagten Spurbreitenmaßes 13 angeordnet, und zwar vorteilhafterweise einschließlich der Tastfahrwerke 10 und der teilweise in der Transportstellung nach außen stehenden Rechzinken 8. Trotz großer Rechkreiseldurchmesser von mehr als 2,7 m und insbesondere etwa 3 m bis 3,5 m kann eine Transporthöhe von weniger als 4 m eingehalten werden.

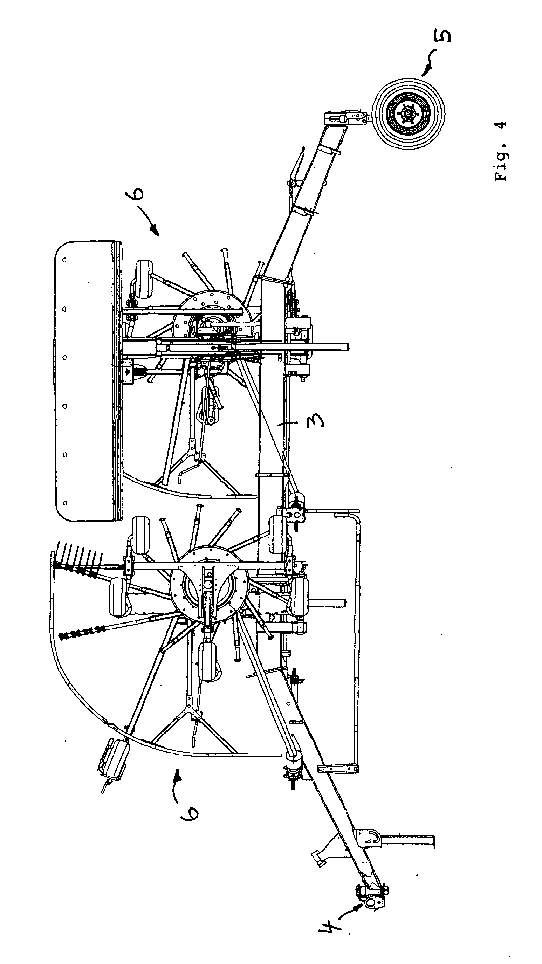

Wie Fig. 4 zeigt, kann eine die genannten Schwenkbewegungen unterstützende Maschinenrahmenausbildung darin bestehen, dass der Maschinenrahmen 3 einen brückenförmigen Verlauf besitzt, dessen Mittelabschnitt, an dem die Tragarme 9 angelenkt sind, sich näherungsweise horizontal erstreckt und erhöht ausgebildet ist. Daran anschließende vordere und hintere Abschnitte des Maschinenrahmens 3 können von besagtem Mittelabschnitt aus zur Ankupplungsvorrichtung 4 bzw. zum Fahrwerk 5 hin abfallen, wie dies Fig. 4 zeigt. Durch einen solchen erhöhten Mittelabschnitt des Maschinenrahmens 3 kann einerseits ein vorteilhafter, ausreichend großer Aushub in der Vorgewendestellung ohne weiteres erreicht werden, wobei für das Ausschwenken in die Transportstellung keine zu großen Verschiebungen der Schlitten 15 bei gleichzeitig relativ kurzen Tragarmlängen vorgesehen werden können.

## Patentansprüche

1. Heuwerbungsmaschine, vorzugsweise in Form eines Kreiselschwaders mit Mittelschwadablage, mit einem sich im Wesentlichen in Fahrtrichtung erstreckenden Maschinenrahmen (3), der an einem vorderen Ende eine Ankupplungsvorrichtung (4) zur Ankupplung an einen Schlepper (2) aufweist und mit einem Fahrwerk (5) am Boden abgestützt ist, sowie mit zumindest zwei Rechkreiseln (6), die auf gegenüberliegenden Seiten des Maschinenrahmens (3) vorgesehen sind und jeweils mittels eines quer vom Maschinenrahmen (3) auskragenden Tragarms (9) am Maschinenrahmen (3) angelenkt sind, wobei die Tragarme (9) jeweils um eine liegende, etwa fahrtrichtungsparallele Tragarmschwenkachse (11) am Maschinenrahmen (3) schwenkbar angelenkt und die Rechkreisel (6) jeweils um eine ebenfalls liegende, etwa fahrtrichtungsparallele Kreiselkippachse (14) am Tragarm (9) verkippbar angelenkt sind, wobei der Abstand der Kreiselkippachse (14) von der Tragarmschwenkachse (11) des jeweiligen Tragarms (9) durch eine Verstellvorrichtung (19) beim Verschwenken der Tragarme (9) aus der abgesenkten Arbeitsstellung nach oben in eine Transportstellung verkürzbar ist, **dadurch gekennzeichnet, dass** die Tragarme (9) nach oben über eine Vertikalstellung hinaus schwenkbar sind und in der Transportstellung gegenüber der Vertikalen spitzwinklig zur gegenüberliegenden Seite, die der Arbeitsstellungsseite des jeweiligen Rechkreisels (6) gegenüberliegt, geneigt sind, wobei die Rechkreisel (6) in der genannten Transportstellung gegenüber ihrem jeweiligen Tragarm (9) um die jeweilige Kreiselkippachse (14) in eine gegenläufig verkippte Stellung steuerbar sind derart, dass die Rechkreisel (6) mit ihrer jeweiligen Rechkreiselebene, die senkrecht zur Kreiseldrehachse steht, zu den Tragarmen (9) spitzwinklig geneigt und im Wesentlichen senkrecht ausgerichtet sind.

2. Heuwerbungsmaschine nach dem vorhergehenden Anspruch, wobei die Rechkreisel (6) in Fahrtrichtung betrachtet in der Transportstellung vollständig innerhalb der vom Fahrwerk (5) des Maschinenrahmens (3) vorgegebenen Spurbreite (13) angeordnet sind.

3. Heuwerbungsmaschine nach einem der vorhergehenden Ansprüche, wobei die Tragarme (9) in der Transportstellung etwa 5° bis 20°, vorzugsweise etwa 10° +/-3° gegenüber der Vertikalen verkippt sind und die Rechkreisel (6) mit ihrer zur Kreiseldrehachse senkrechten Rechkreiselebene gegenüber dem jeweiligen Tragarm (9) um einen Winkel von etwa 5° bis 20°, vorzugsweise etwa 10° +/-3° verkippt sind.

4. Heuwerbungsmaschine nach einem der vorhergehenden Ansprüche, wobei in der Transportstellung eine Gesamtbreite der Heuwerbungsmaschine 2,55 m oder weniger und eine Transporthöhe 4,0 m oder weniger beträgt.

5. Heuwerbungsmaschine nach einem der vorhergehenden Ansprüche, wobei die Rechkreisel (6) jeweils um die genannte Kreiselkippachse (14) schwenkbar an einem Schlitten (15) gelagert sind, der an dem jeweiligen Tragarm (9) entlang dessen Längsachse verfahrbar gelagert ist, wobei die Verstellvorrichtung (19) jeweils ein Schiebeelement (20) zur Verschiebung des Schlittens (15) beim Verschwenken des Tragarms (9) umfasst, welches Schiebeelement (20) einen maschinenrahmenfesten Anlenkpunkt (21) und einen schlittenfesten Anlenkpunkt besitzt.

6. Heuwerbungsmaschine nach dem vorhergehenden Anspruch, wobei der maschinenrahmenfeste Anlenkpunkt (21) des Schiebeelements (20) von der Tragarmschwenkachse (11) beabstandet angeordnet ist derart, dass der maschinenrahmenfeste Anlenkpunkt (21) in der abgesenkten Arbeitsstellung des Tragarms (9) bei Betrachtung in Fahrtrichtung im Wesentlichen auf einer Verbindungsgeraden zwischen der Tragarmschwenkachse (11) und dem Schlitten (15) liegt.

7. Heuwerbungsmaschine nach einem der beiden vorhergehenden Ansprüche, wobei die Beabstandung des maschinenrahmenfesten Anlenkpunkts (21) des Schiebeelements (20) von der Tragarmschwenkachse (11) etwa 1/7 bis 1/5, insbesondere etwa 1/6 der Länge des Schiebeelements (20) beträgt.

8. Heuwerbungsmaschine nach einem der vorhergehenden Ansprüche, wobei die Tragarme (9) jeweils längenunveränderbar, insbesondere als starre Träger ausgebildet sind und zum Ausheben der Tragarme (9) jeweils eine Hubzylindereinheit (16) vorgesehen ist, die jeweils an einem tragarmfesten Anlenkpunkt (17) und einem maschinenrahmenfesten Anlenkpunkt (18) gelenkig angelenkt ist, wobei der tragarmfeste Anlenkpunkt (17) in der abgesenkten Arbeitsstellung des Tragarms (9) von der Tragarmschwenkachse (11) weiter beabstandet ist als die Kreiselkippachse (14) und/oder wobei der maschinenrahmenfeste Anlenkpunkt (18) auf einer dem Rechkreisel (6) gegenüberliegenden Seite des Maschinenrahmens (3) angeordnet ist.

9. Heuwerbungsmaschine nach dem vorhergehenden Anspruch, wobei in der abgesenkten Arbeitsstellung ein Abstand des tragarmfesten Anlenkpunktes (17) der jeweiligen Hubzylindereinheit (16) von der Tragarmschwenkachse (11) etwa 110 % bis 140 %, insbesondere etwa 120 % bis 130 %, des Abstandes der Kreiselkippachse von der Tragarmschwenkachse in der abgesenkten Arbeitsstellung beträgt.

10. Heuwerbungsmaschine nach einem der vorhergehenden Ansprüche, wobei die Hubzylindereinheiten (16) jeweils mit einem Kragen eines Zylinders an dem genannten maschinenrahmenfesten Anlenkpunkt (18) gelagert sind.

## Claims

1. A hay-making machine, preferably in the form of a rotary swather having a central swath store, comprising a machine frame (3) which extends substantially in the direction of travel, which has a coupling apparatus (4) at a front end for coupling to a tractor (2) and which is supported on the ground by a chassis (5), and comprising at least two rotary rakes (6) which are provided at oppositely disposed sides of the machine frame (3) and which are each pivotally connected to the machine frame (3) by means of a carrier arm (9) projecting transversely from the machine frame (3), wherein the carrier arms (9) are each pivotably connected to the machine frame (3) about a carrier arm pivot axis (11) which is horizontal and which is approximately parallel to the direction of travel and the rotary rakes (6) are each tiltably connected to the carrier arm (9) about a gyro tilt axis (14) which is likewise horizontal and which is approximately parallel to the direction of travel, wherein the spacing of the gyro tilt axis (14) from the carrier arm pivot axis (11) of the respective carrier arm (9) can be shortened by an adjustment apparatus (19) on a pivoting of the carrier arms (9) from a lowered working position upwardly into a transport position, **characterised in that** the carrier arms (9) are pivotable upwardly beyond a vertical position and are inclined at an acute angle in the transport position with respect to the vertical toward the oppositely disposed side which is disposed opposite the working position side of the respective rotary rake (6), wherein the rotary rakes (6) can be controlled in the named transport position with respect to their respective carrier arm (9) about the respective gyro tilt axis (14) into an oppositely tilted position such that the rotary rake plane of the rotary rakes (6) extending perpendicular to the gyro axis is inclined at an acute angle with respect to the carrier arms (9) and is aligned substantially perpendicular.

2. A hay-making machine in accordance with the preceding claim, wherein the rotary rakes (6) are arranged completely within the track width (13) predefined by the chassis (5) of the machine frame (3) observed in the direction of travel the transport position.

3. A hay-making machine in accordance with one of the preceding claims,
wherein the carrier arms (9) are tilted approximately 5° to 20°, preferably approximately 10° +/- 3° with respect to the vertical in the transport position and the rotary rake plane of the rotary rakes (6) perpendicular to the gyro axis of rotation is tilted with respect to the respective carrier arm (9) by an angle of approximately 5° to 20°, preferably approximately 10° +/- 3°.

4. A hay-making machine in accordance with one of the preceding claims,
wherein a total width of the hay-making machine in the transport position amounts to 2.55 m or less and to a transport height of 4.0 m or less.

5. A hay-making machine in accordance with one of the preceding claims,
wherein the rotary rakes (6) are each pivotably supported about the named gyro tilt axis (14) at a carriage (15) which is movably supported at the respective carrier arm (9) along its longitudinal axis, with the adjustment apparatus (19) respectively comprising a pushing element (20) for displacing the carriage (15) on a pivoting of the carrier arm (9), said pushing element (20) having a pivotal connection point (21) fixed at a machine frame and having a pivotal connection point fixed at the carriage.

6. A hay-making machine in accordance with the preceding claim, wherein the pivotal connection point (21) of the pushing element (20) fixed at the machine frame is arranged spaced apart from the carrier arm pivot axis (11) such that the pivotal connection point (21) fixed at the machine frame is disposed substantially on a straight connection line between the carrier arm pivot axis (11) and the carriage (15) in the lowered working position of the carrier arm (9) when observed in the direction of travel.

7. A hay-making machine in accordance with one of the two preceding claims, wherein the spacing apart of the pivotal connection point (21) of the pushing element (20) fixed at the machine frame from the carrier arm pivot axis (11) amounts to approximately 1/7 to 1/5, in particular to approximately 1/6, of the length of the pushing element (20).

8. A hay-making machine in accordance with one of the preceding claims,
wherein the carrier arms (9) are each configured as length-invariable, in particular as rigid carriers, and a respective lifting cylinder unit (16) is provided for raising the carrier arms (9) which is respectively pivotably connected at a pivotal connection point (17) fixed at a carrier arm and at a pivotal connection point (18) fixed at a machine frame, wherein the pivotal connection point (17) fixed at the carrier arm is spaced further apart from the carrier arm pivot axis (11) in the lowered working position of the carrier arm (9) than the gyro tilt axis (14); and/or wherein the pivotal connection point (18) fixed at the machine frame is arranged at a side of the machine frame (3) disposed opposite the rotary rake (6).

9. A hay-making machine in accordance with the preceding claim, wherein a spacing of the pivotal connection point (17) of the respective lifting cylinder unit (16) fixed at the carrier arm from the carrier arm pivot axis (11) in the lowered working position amounts to approximately 110% to 140%, in particular to approximately 120% to 130%, of the spacing of the gyro tilt axis from the carrier arm pivot axis in the lowered working position.

10. A hay-making machine in accordance with one of the preceding claims,
wherein the lifting cylinder units (16) are each supported by a collar of a cylinder at the named pivotal connection point (18) fixed at the machine frame.

## Revendications

1. Faneuse, de préférence sous la forme d'un giro-andaineur avec dépose centrale de l'andain, comprenant un châssis de machine (3) s'étendant essentiellement dans le sens de la marche, qui comporte sur une extrémité avant un dispositif d'attelage (4) destiné à l'attelage sur un tracteur (2) et qui supporté sur le sol au moyen d'un mécanisme de déplacement (5), ainsi qu'au moins deux toupies de ratissage (6) qui se trouvent sur des côtés opposés du châssis de machine (3) et qui sont articulées sur le châssis de machine (3) respectivement au moyen d'un bras de support (9) faisant saillie transversalement du châssis de machine (3), les bras de support (9) étant articulés pivotants sur le châssis de machine (3) respectivement autour d'un axe de pivotement d'arbre de support (11) horizontal approximativement parallèle au sens de la marche et les toupies de ratissage (6) étant articulées basculables sur le bras de support (9) respectivement également autour d'un axe de basculement de toupie (14) horizontal approximativement parallèle au sens de la marche, l'écart entre l'axe de basculement de toupie (14) et l'axe pivotement de bras de support (11) du bras de support (9) respectif pouvant rétréci par un dispositif de réglage (19) en pivotant les bras de support (9) position de travail abaissée vers le haut dans une position de transport, **caractérisée en ce que** les bras de support (9) peuvent pivoter vers le haut auau-delà d'une position verticale et sont inclinés dans la position de transport selon un angle aigu par rapport à la verticale vers le côté opposé qui est au côté de la position de travail de la toupie de ratissage (6) respective, les toupies de ratissage (6) pouvant être commandées dans ladite position de transport autour de l'axe de basculement de toupie (14) respectif dans une position basculée inversée par rapport à leur bras de support (9) respectif de telle manière que les toupies de ratissage (6) sont inclinées avec leur plan de toupie de ratissage respectif qui se trouve perpendiculaire à l'axe de rotation toupie, selon un angle aigu avec les bras de support (9) et elles sont orientées essentiellement verticalement.

2. Faneuse selon la revendication précédente, dans laquelle, dans la position de transport, les toupies de ratissage (6), vues dans le sens de la marche, sont disposées entièrement à l'intérieur de l'écartement des roues (13) prédéfini par le mécanisme de déplacement (5) du châssis de machine (3).

3. Faneuse selon l'une des revendications précédentes, dans laquelle, dans la position de transport, les bras de support (9) sont basculés d'environ 5° à 20°, de préférence d'environ 10° +/-3° par rapport à la verticale, et les toupies de ratissage (6) sont basculées avec leur plan de toupie de ratissage perpendiculaire à l'axe de rotation de toupie selon un angle d'environ 5° à 20°, de préférence d'environ 10° +/-3°, par rapport au bras de support (9) respectif.

4. Faneuse selon l'une des revendications précédentes, dans laquelle dans la position de transport, une largeur totale de la faneuse est de 2,55 m ou moins et une hauteur de transport de 4,0 m ou moins.

5. Faneuse selon l'une des revendications précédentes, dans laquelle les toupies de ratissage (6) sont montées pivotantes sur un glissoir (15) respectivement autour dudit axe de basculement de toupie (14), le glissoir étant monté sur le bras de support (9) respectif déplaçable le long de son axe longitudinal, le dispositif de réglage (19) comportant respectivement un élément de déplacement (20) destiné à déplacer le glissoir (15) lors du pivotement du bras de support (9), ledit élément de déplacement (20) possédant un point d'articulation (21) fixé sur le châssis de machine et un point d'articulation fixé sur le glissoir.

6. Faneuse selon la revendication précédente, dans laquelle le point (21) fixé sur le châssis de machine de l'élément de déplacement (20) est disposé espacé de l'axe de pivotement de bras de support (11) de telle que, dans la position de travail abaissée du bras de support (9), le point d'articulation (21) fixé sur le châssis de machine se trouve, vu dans le sens de marche, essentiellement sur une droite de liaison entre l'axe de pivotement de bras de support (11) et le glissoir (15).

7. Faneuse selon l'une des deux revendications précédentes, dans laquelle l'écart entre le point d'articulation (21) de l'élément de déplacement (20) fixé sur le châssis de machine et l'axe de pivotement de bras de support (11) est d'environ 1/7 à 1/5, en particulier d'environ 1/6 de la longueur de l'élément de déplacement (20).

8. Faneuse selon l'une des revendications précédentes, dans laquelle les bras de support (9) sont réalisés respectivement de longueur inchangeable, en particulier sous la forme de supports rigides et une unité de vérin de levage (16) respective est destinée à lever les bras de support (9), ladite unité de vérin de levage étant articulée respectivement sur un point d'articulation (17) fixé sur le bras de support et un point d'articulation (18) fixé sur le châssis de machine, le point d'articulation (17) fixé sur le bras de support étant davantage espacé de l'axe de pivotement de bras de support (11) dans la position de travail du bras de support (9) que l'axe de basculement de toupie (14) et/ou dans laquelle le point d'articulation (18) fixé sur le châssis de machine est disposé sur un côté du châssis de machine (3) opposé à la toupie de ratissage (6).

9. Faneuse selon la revendication précédente, dans laquelle dans la position de travail abaissée, un écart entre le point d'articulation (17) fixé sur le bras de support de l'unité de vérin de levage (16) respective et l'axe de pivotement de bras de support (11) est d'environ 110 % à 140 %, en particulier environ 120 % à 130 %, de l'écart entre l'axe de basculement de toupie et l'axe de pivotement de bras de support dans la position de travail.

10. Faneuse selon l'une des revendications précédentes, dans laquelle les unités de vérin de levage (16) sont logées respectivement avec un rebord d'un vérin sur ledit point d'articulation (18) fixé sur le châssis de machine.
